# EUROPEAN PATENT SPECIFICATION

(11) **EP 3 921 386 B1**
(45) Date of publication and mention of the grant of the patent: **10.06.2026**
(21) Application number: 20702686.5
(22) Date of filing: 07.02.2020
(51) Int. Cl.: C10G 1/00, C07G 1/00, D21C 11/00, C10G 1/02, C08L 97/00, C08H 7/00, C08H 8/00, C10B 53/02

(54) **PROCESS FOR THE PRODUCTION OF A BIO-OIL**
VERFAHREN ZUR HERSTELLUNG EINES BIOÖLS
PROCÉDÉ DE PRODUCTION D'UNE BIO-HUILE

(30) Priority: 08.02.2019 EP 19156210
(43) Date of publication of application: 15.12.2021
(73) Proprietor: SCA Forest Products AB, 85188 Sundsvall (SE)
(72) Inventor: KUMAR, Shushil, 907 32 Umeå (SE); KUGGE, Christian, 862 32 Kvissleby (SE)
(74) Representative: Weickmann & Weickmann PartmbB
(86) International application number: PCT/EP2020/053178
(87) International publication number: WO 2020/161323

(56) References cited:
- WO-A1-2017/048163
- US-A1- 2016 145 497
- US-A2- 2017 369 802

## Description

The present invention relates to a process for producing bio oil comprising depolymerized lignin and a use of a unit for producing bio-oil.

Lignin is one of the two major components of lignocellulose in plants. Structurally it is a class of complex cross-linked phenolic polymers. From an energy point of view lignin has a high C/O ratio and accounts for a substantial proportion of carbon-based energy in lignocellulose. In the past however, lignin has only been considered as by-product of the pulp and paper industry. Only a minor amount of lignin produced by the pulp and paper industry was utilized commercially and the remainder was used as a low-value fuel. Recently, efforts have been made to recover lignin and convert it to bio-oil.

WO 2017/048163 and WO 2017/048164 describe processes for producing a bio-oil from lignin wherein a composition comprising kraft black liquor and an acidifying agent is treated in a reactor, optionally in the presence of H₂ and/or CO and optionally in the presence of a catalyst, thereby causing depolymerization of lignin in the black liquor composition and recovering a bio-oil comprising said depolymerized lignin.

US 2017/369802 A2 discloses an apparatus and process for producing a bio-oil from lignocellulosic biomass, e.g. black liquor, in an up-flow reactor with bio-oil separation from the reactor effluent.

There is, however, still a need to provide economically feasible methods for the production of a bio-oil comprising depolymerized lignin.

### Summary of the invention

The present invention provides novel processes for producing bio-oil from a lignin containing starting material having improved efficacy and/or economic feasibility compared to known processes. Further, the present invention provides novel use of units for producing bio-oil adapted for carrying out these novel processes.

The present inventors have found that the maximum running time of a lignin-depolymerization reactor is increased to a large extent, when the reactor is operated in an up-flow mode, i.e. when a lignin-containing composition is introduced into a lower portion of the reactor and passed through the reactor in an upward direction and removed from an upper portion of the reactor. By this means, the formation of deposits and clogging within the reactor can be avoided or reduced to a large extent. A further increase in the maximum running time may be achieved when the reactor is operated with a vertical temperature gradient, particularly under conditions where a lower temperature is provided in the lower reactor portion and a higher temperature is provided in the upper reactor portion.

Further, the present inventors have found that when simultaneously adding an acidifying agent and at least one organic extracting agent to a composition comprising depolymerized lignin an excess foaming may be avoided.

Furthermore, the present inventors have found that the efficacy of washing and desalting an oil composition comprising depolymerized lignin may be increased by contacting a composition comprising depolymerized lignin with an aqueous washing liquid before recovering an oil phase by phase separation. The aqueous washing liquid may be recycled, e.g. partially recycled, and reused several times. The aqueous washing liquid may contain a metal chelator such as EDTA and/or an organic acid to bind and remove metal ions present in the oil composition.

A first aspect of the present invention relates to a process according to claim 1.

A second aspect outside of the scope of the present invention relates to a process for producing bio-oil comprising the steps:
(a) providing a lignin-containing composition having an alkaline pH,
(b) passing the lignin-containing composition through a reactor under conditions of elevated temperature and elevated pressure, thereby causing depolymerization of the lignin, wherein a bio-oil composition comprising depolymerized lignin is obtained,
(c) optionally cooling the bio-oil composition and removing gaseous components therefrom,
(d) simultaneously adding at least one acidifying agent for pH adjustment, and at least one organic extracting agent to the bio-oil composition,
(e) optionally filtering the oil phase,
(f) obtaining an oil phase from the bio-oil composition by phase-separation, wherein the oil phase comprises depolymerized lignin and an organic extracting agent,
(g) optionally desalting the oil phase,
(h) optionally adding an organic diluent to the oil phase,
(i) optionally evaporating the organic extracting agent comprised in the oil phase, and
(j) obtaining a bio-oil comprising depolymerized lignin.

A third aspect outside of the scope of the present invention relates to a process for producing bio-oil comprising the steps:
(a) providing a lignin-containing composition having an alkaline pH,
(b) passing the lignin-containing composition through a reactor under conditions of elevated temperature and elevated pressure, thereby causing depolymerization of the lignin, wherein a bio-oil composition comprising depolymerized lignin is obtained,
(c) optionally cooling the bio-oil composition and removing gaseous components therefrom,
(d) optionally adding at least one acidifying agent for pH adjustment, and optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and optionally an organic extracting agent,
(g) washing and desalting the oil phase comprising (i) contacting the oil phase with an aqueous washing liquid and carrying out a phase-separation wherein the resulting mixture is separated into an oil phase and at least one aqueous phase, and subsequently (ii) contacting the oil phase with an adsorbent and/or an ion exchange material, wherein the aqueous washing liquid optionally comprises a chelator such as EDTA and/or an organic acid,
(h) optionally adding an organic diluent to the oil phase,
(i) optionally evaporating the organic extracting agent comprised in the oil phase, and
(j) obtaining a bio-oil comprising depolymerized lignin.

A fourth aspect of the invention is a use according to claim 15.

### Detailed description

The present invention relates to the production of a bio-oil comprising depolymerized lignin. According to step (a) a starting material is provided which is a lignin-containing composition having an alkaline pH, e.g. a pH of about 8 to about 14, a pH of about 10 to about 14 or of about 12 to about 14. The lignin-containing composition is a black liquor composition, e.g. a kraft black liquor composition, i.e. a black liquor composition from a kraft pulping process, sulfite pulping process, soda pulping process, organosolv biorefinery process and/or ethanol biorefinery process.

According to the present invention, further components may be added to the lignin containing composition. In certain embodiments, lignin-derived components, e.g. solid lignin powder may be added to the liquid composition in order to increase the lignin content thereof. Different types of lignin powder are available, e.g. as described in WO 2017/48163. On the other hand, the lignin-containing composition may be diluted, e.g. by adding water in order to decrease the lignin content thereof. In a specific embodiment, the lignin-derived component may be selected from a partially depolymerized lignin oil or a depolymerized and partially hydrotreated, e.g. partly deoxygenated and partly desulfurized oil. For example, lignin-derived components may be added in an amount of about to 100 weight-% based on the Klason lignin content originally present in the composition. Particularly, these compounds may be added in an amount of about 10 weight-% to about 100 weight-%, more particularly in an amount of about 20 weight-% to about 70 weight-%, based on the Klason lignin weight content originally present in the composition.

If desired, at least one further component, i.e. a non-lignin derived component may be added to the lignin-containing composition e.g. as described in WO 2017/48163. This further component may be selected from a carbonium and/or arenium ion scavenger, a radical scavenger, a lubricant, an oxygen atom transfer agent, a rosin containing oil and any combination thereof. The further component may be added in an amount of up to about 100 weight-%, particularly in an amount of about 10 weight-% to about 100 weight-%, more particularly in an amount of about 5 weight-% to about 30 weight-%, based on the Klason lignin weight content in the lignin-containing composition.

In a specific embodiment, the further component may be selected from rosin containing oils, particularly tall oil and any product derived therefrom comprising rosin constituents, particularly resin acids, e.g. abietic acid and/or pimaric acid. For example, the rosin-containing oil may be selected from crude tall oil and fractions of crude tall oil such as tall oil pitch, tall oil rosin, tall oil fatty acids, crude sulphate turpentine and/or any combination thereof.

In certain embodiments, the further component may be a carbonium and/or arenium ion scavenger or a radical scavenger, Examples of carbonium and/or arenium ion scavengers are aromatic hydrocarbons or alcohols such as phenol, 2-naphthol, catechol, methylcatechol, thymol, anisole, guaiacol, cresol, toluene, o-, m-, p-xylene, p-cymene or any combination thereof. Examples of radical scavengers are stilbenoids, such as piceatannol, methylpiceatannol or resveratrol, or any combination thereof. Examples of lubricants are toluene, o-, m-, p-xylene, p-cymene, gasoline, diesel or any combination thereof. Examples of oxygen atom transfer agents are anthraquinone, a tannine, menadione, quercetin or any combination thereof.

With regard to these further components specific reference is made to WO 2017/048163.

In certain embodiments, the lignin-containing composition which is provided according to step (a) and passed to the depolymerization reactor according to step (b) may have a dry solid content in the range of about 10 weight-% to about 60 weight-%, particularly of about 10 weight-% to about 50 weight-% or of about 15 weight-% to about 50 weight-% or of about 20 weight-% to about 50 weight-%, more particularly of about 35 weight-% to about 45 weight-%, e.g. about 40 weight-% based on the total weight of the lignin-containing composition.

Further, in certain embodiments, the lignin-containing composition which is provided according to step (a) and passed to the depolymerization reactor according to step (b) may have a Klason lignin content in the range of about 50 g/kg to about 300 g/kg, particularly of about 100 g/kg to about 200 g/kg based on the total volume of the lignin-containing composition. The Klason lignin content may be determined gravimetrically according to the SCAN-CM 71 method (Scandinavian Pulp, Paper and Board Testing Committee).

Step (b) of the process of the invention comprises passing the lignin-containing composition through a reactor under conditions of elevated temperature and elevated pressure, thereby causing depolymerization of the lignin, wherein a bio-oil composition comprising depolymerized lignin is obtained.

According to the first aspect of the present invention, the reactor is operated in an up-flow mode comprising introducing the composition into a lower portion of the reactor, passing the composition through the reactor in an upward direction and removing the composition from an upper portion of the reactor. In this context, the term "lower portion of the reactor" particularly refers to a position which is between the bottom of the reactor and a position which is about 30% upwards from the bottom of the reactor based on the total height of the reactor. The term "upper portion of the reactor" particularly refers to a position which is between the top of the reactor and a position which is about 30% downwards from the top of the reactor based on the total height of the reactor. In a particular embodiment, the composition may be introduced into the bottom of the reactor, passed through the reactor in an upward direction and removed from the top of the reactor. In a particular embodiment, the reactor is a vertical reactor.

When operating the lignin-depolymerization reactor in an up-flow mode as described above, the maximum running time of the reactor, e.g. the time until occurrence of a significant pressure drop within the reactor of about 10 bar or higher may be extended to several months even in case the reactor is fed with a composition having a dry solid content of 40 weight-% or more. This effect appears to be caused by a reduced deposition of solids within the reactor.

The depolymerization reaction in step (b) is carried out under conditions of elevated temperature and elevated pressure which are suitable for conducting the depolymerization reaction. The term "elevated temperature" relates to a temperature which is elevated compared to room temperature and the term "elevated pressure" relates to a pressure which is elevated compared to atmospheric pressure. Particularly, the reactor is kept at a temperature between about 180°C and about 360°C, more particularly between about 200°C and about 280°C and at a pressure between about 40 bar and about 160 bar, more particularly between about 80 bar and about 120 bar, optionally in the presence of a gas such as H₂, CO, CO₂, N₂, NH₃, H₂S, moist syngas, mercaptans such as methanethiol, dimethylsulfide, dimethyldisulfide, SO₂, methane, ethane, propane, butane and any mixture thereof, e.g. in the presence of a reducing gas such as H₂ or H₂/CO, particularly in the presence of H₂, and optionally in the presence of a catalyst. For the depolymerization of lignin a wide range of catalysts can be used such as a noble metal on a support such as a carbon-based support, e.g. activated carbon, charcoal, graphene, carbon nanotubes, or graphite, or a metal oxide-based support such as alumina, aluminum phosphate, zeolite, hydrotalcite, hydroxyapatite, magnesium oxide, zirconia, titanium dioxide, ceria, chromite or molybdite. Other possible catalysts are transition metals such as V, Cr, Fe, Co, Ni, Cu, Zn, Zr, Nb, Mo and W or transition metal oxides such as NiO on any of the previously mentioned supports, as well as unsupported metal, metal oxide, metal carbide or metal nitride particles wherein the metal is particularly a transition metal. Further unsupported catalysts that are suitable are Co-Mo-S, MoS₂, VS₂, Ni-Mo and Fe-Cu catalysts.

In particular embodiments of the present invention the reactor in step (b) is operated with a vertical temperature gradient, where a lower temperature is in the lower reactor portion and a higher temperature is in the upper reactor portion. The temperature difference between the lower reactor portion and the upper reactor portion may be between about 5°C and about 150°C, particularly between about 10°C and about 100°C. e.g. between about 10°C and about 60°C, between about 10°C and about 50°C, between about 20°C and about 50°C, or between about 25°C and about 40°C. For example, the reactor may be operated at a temperature at about 220°C at the bottom and about 250°C at the top.

The efficacy of the process may be further increased when in step (b) the reactor is flushed with an aqueous liquid, particularly with water, in suitable intervals, e.g. after an operation period of about 2 days to about 7 days.

After the depolymerization reaction, the composition may be cooled in step (c) to a temperature below the boiling point of an organic extraction agent which is added in subsequent step (d). The cooling may be performed in a condenser in which gaseous components such as H₂ and other non-condensable gases are removed.

Step (d) optionally comprises adding at least one acidifying agent for pH adjustment, e.g. for adjustment of the pH from about 3 to about 9, particularly from about 4 to about 7, is added to the composition. The acidifying agent may be selected from H₂SO₄, CO₂, SO₂, acidic process water having a pH of about 1 to about 3 or any combination thereof.

Further, step (d) optionally comprises the addition of an organic extracting agent which is substantially non-miscible with water. In certain embodiments, the extracting agent is a low-boiling polar and/or aromatic solvent which may have a boiling point of at least about 50°C or least about 70°C and up to about 90°C or up to about 120°C under atmospheric pressure. The low-boiling solvent may be selected from esters, ethers, ketones and alcohols, such as ethyl acetate, methyl tetrahydrofuran and isopropyl acetate or any combination thereof.

In particular embodiments, the organic extracting agent may be a lignin-derived oil, e.g. a bio-oil comprising depolymerized lignin which has been partially hydrotreated, e.g. partially deoxygenated and desulfurized. In further particular embodiments, the extracting agent may be a rosin-containing oil, e.g. a tall oil, including fractions thereof as described above. The invention also encompasses the addition of mixtures of a low-boiling solvent, a lignin-derived oil and/or a rosin-containing oil.

Usually, the organic extracting agent is added in excess to the mass of bio-oil composition, e.g. in an amount of about 50 weight-% or more, e.g. up to about 200 weight-% based on the total weight of the bio-oil composition.

In particular embodiments, step (d) comprises adding at least one acidifying agent and an organic extracting agent.

According to the second aspect outside of the scope of the invention, the acidifying agent and the organic extracting agent are added substantially simultaneously to the composition thereby reducing and/or completely avoiding undesired foaming. The term "simultaneous addition" in this context is particularly to be understood, that both agents are at least partially added within a common time period. The acidifying agent and/or the organic extracting agent may be added at an elevated temperature, e.g. at a temperature of at least about 50°C up to a temperature which is just below the boiling point of the extracting agent.

After step (d) the composition is optionally subjected to a filtering step (e) which may be carried out by passing the composition through a filtration device, e.g. a filtration device having a mesh width of about 50 µm to about 200 µm such as about 70 µm.

Subsequently in step (f) a phase-separation is carried out. This phase-separation may comprise decanting the oil phase from a further phase, e.g. from an aqueous phase in a separator. The phase-separation may comprise separation the composition into an oil phase and at least one further phase, e.g. a phase comprising solids, particularly non-depolymerized lignin solids, and an aqueous phase comprising dissolved salts. These phases are withdrawn separately from the separator, thereby obtaining an oil phase comprising depolymerized lignin and organic extracting agent. In certain embodiments, the phase separation may be carried out as described in WO 2017/048163.

Subsequently, a desalting step (g) may be carried out. This step may comprise (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material. The aqueous washing liquid may contain a metal chelator such as EDTA and/or an organic acid such as formic acid, acetic acid, citric acid, oxalic acid and any mixture thereof to bind and remove metal ions such as Na⁺, K⁺ and Ca²⁺ present in the oil phase.

According to the third aspect outside of the scope of the invention, desalting in step (g) comprises (i) contacting the oil phase with an aqueous washing liquid and carrying out a phase-separation wherein the resulting mixture is separated into an oil phase and at least one aqueous phase, and subsequently (ii) contacting the oil phase with an adsorbent and/or an ion exchange material. This procedure results in an increased removal of undesired components such as salts from the oil phase and in an increased degree of purity of the bio-oil. The aqueous washing liquid may be at least partially recycled and reused several times. For example, a larger portion of the aqueous washing liquid may be recycled along with a smaller amount of fresh and salt-lean aqueous phase.

According to step (h) an organic diluent may be added to the oil phase. In certain embodiments, the organic diluent is added in an amount of about 20 to about 100 wt-% based on the weight of the oil phase. In certain embodiments, the organic diluent is a liquid having a lower volatility than a low-boiling organic extracting agent added in step (d). For example, the organic diluent may be selected from solvents, e.g. polar and/or aromatic solvents, having a boiling temperature of more than 100°C under atmospheric pressure such as benzyl alcohol, cresol and/or terpineol including isomers thereof. In particular embodiments, the organic diluent may be selected from lignin-derived oils, and/or non-lignin-derived oils, e.g. rosin-containing oils such as tall oil including fractions thereof as described above, and/or terpene-based oils including turpentine, turpentine fractions, and/or oxygenated turpentine.

Evaporation according to step (i) comprises evaporating the low boiling organic extracting agent from step (d) comprised in the oil phase. A higher boiling diluent which has been added to the composition in step (h), will not be evaporated, but will remain with the oil phase. The organic extracting agent separated from the oil phase may be recycled to step (d). In case only a lignin-derived oil and/or a rosin-containing oil have been added in step (d) as an organic extracting agent, the evaporation step (i) may be omitted.

Step (j) comprises obtaining bio-oil comprising depolymerized lignin and optionally non-evaporated organic extraction agent from step (d) and/or organic diluent from step (h). The depolymerized lignin obtained in step (j) has a weight average molecular weight which is substantially reduced compared to the weight average molecular weight of a depolymerized lignin added to the reactor in step (b). For example, the weight average molecular weight of the depolymerized lignin may be in the range of about 200 to about 2000 g/mol, e.g. about 250 to about 1000 g/mol, particularly of about 300 to about 800 g/mol. The weight average molecular weight of depolymerized lignin can be determined e.g. by size exclusion chromatography (SEC) coupled to an UV detector (256 nm). Suitable chromatography columns are Shodex SB-804 HQ, SB-803-HQ and SB-802.5 HQ together with suitable Shodex pre-columns which can be used with a borate buffer pH 10.3/10% methanol as eluent. Further, the system can be calibrated with polystyrene sulfonate standards having known molecular weights.

The resulting bio-oil obtained in step (j) may be used for different applications such as a sizing agent for the production of hydrophobic paper, or for the manufacture of lignin nanoparticles or lignin softeners for e.g. plastics, or may be further processed to a hydrocarbon product, e.g. by hydrotreatment.

Hydrotreatment may, e.g. involve a treatment in the presence of a reducing gas such as H₂ and/or CO and a hydrotreatment catalyst at an elevated temperature, e.g. at a temperature between about 200°C to about 400°C, particularly between about 270°C and about 350°C. The product resulting from the hydrotreatment is a hydrocarbon product containing only minor amounts of nitrogen, sulfur and/or oxygen, for example 0.1 weight-% or less nitrogen, 0.05 weight-% or less sulfur and 0.2 weight-% or less oxygen. A partially hydrotreated lignin oil may contain, e.g. 0.5 wt% nitrogen, 0.5 wt% sulfur, 77 wt% carbon, 7 wt% hydrogen and 15 wt% oxygen.

The hydrocarbon product obtained from the hydrotreatment may be subjected to a phase separation wherein the product is separated into a gaseous phase comprising low boiling components, a liquid hydrocarbon product phase and an aqueous phase. The liquid hydrocarbon product may be subjected to a fractionation based on the boiling temperature. An exemplary hydrotreatment procedure is described in WO 2017/078582.

In a particular embodiment the process of the invention as described above is operated continuously.

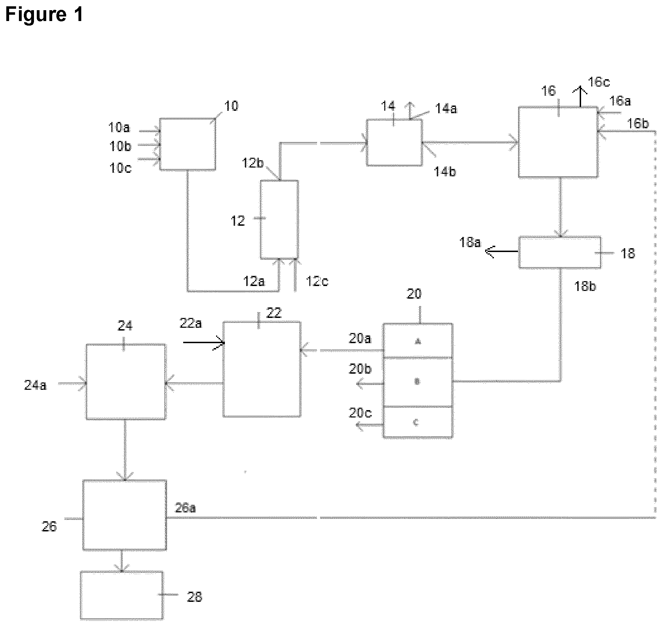

The fourth aspect of the invention relates to a use of a unit for producing bio-oil. A particular embodiment of such a unit is schematically depicted in Figure 1. The unit comprises a container (10) for providing a lignin-containing composition. The container (10) may be formed as a mixing tank having several inlets (10a, 10b, 10c) for introducing the lignin-containing composition and further components. The lignin-containing composition is passed from container (10) to a lignin-depolymerization reactor (12) which is operated under conditions of elevated temperature and pressure. The reactor (12) comprises an inlet (12a) for introducing the lignin-containing composition into a lower reactor portion, particularly into the reactor bottom and an outlet (12b) for removing the composition from an upper reactor portion, particularly from the top of the reactor. Further, the reactor may comprise an inlet (12c) for introducing a reducing gas such as H₂ and/or CO under pressure.

The composition is then transferred from the reactor (12) to a condenser (14) where the composition is cooled, e.g. below 100°C and H₂ and other non-condensable gases are withdrawn via an outlet (14a). Thereafter, the liquid portion of the composition is withdrawn through an outlet (14b) and passed to a mixing device (16) adapted for adding at least one acidifying agent, e.g. by means of inlet (16a) and at least one organic extracting agent, e.g. by means of inlet (16b). Gases produced in the mixing device may be removed through an outlet (16c).

The acidified composition is then passed through an optional filtration device (18). The solids are removed through an outlet (18a) and the liquid stream (18b) is passed to a phase-separator (20). In the phase-separator (20) the composition separated into individual phases, particularly into an oil phase (A) and at least one further phase, e.g. a solid-containing phase (B) and a dissolved salt-containing aqueous phase (C). The oil phase (A) comprising the depolymerized lignin and the organic extracting agent is withdrawn from the separator (20), e.g. by decanting via outlet (20a). The further phases (B,C) may be withdrawn via respective outlets (20b, 20c).

The oil phase is passed to an optional desalting device (22) for reducing the salt content thereof. Desalting may encompass the addition of an aqueous washing liquid which is added as stream (22a) followed by phase-separation and/or passing the oil phase over an adsorbent and/or an ion exchange material (not shown). The washing liquid may be recycled and reused several times.

The oil phase may be passed to an optional mixing device (24) adapted for adding a high boiling organic diluent to the composition via inlet (24a). Thereafter, the oil phase comprising the depolymerized lignin, the organic extracting agent and optionally the organic diluent is passed to an evaporator (26) for evaporating at least a part of low-boiling organic extracting agent comprised in the oil phase. The evaporated organic extraction agent may be withdrawn via outlet (26a) and recycled to the mixing device (16) via inlet (16b). From the evaporator (26), the oil phase may be passed to a container (28) for collecting the product which is a bio-oil comprising depolymerized lignin.

Further, the unit may comprise a hydrotreatment reactor, optionally a phase separator and optionally a fractionation device (not shown) for producing a hydrocarbon product from the bio-oil.

### Examples

### Example 1

A lignin-depolymerization reactor was operated in down-flow mode, i.e. the reactor was fed from the top and the product was withdrawn from the bottom. The following process conditions were used:
Black liquor (solid content 48 weight-%) was passed to a feed container after filtering it through a 70 µm filter. The feed container was continuously stirred. Water was added to the container for adjusting the desired solid content of the composition. The Klason lignin content of the initial black liquor feed was analyzed to be around 150 g/kg.

The mixture from the container was first pumped through a preheater before sending it to the reactor which was operated at around 235°C. The reactor was pressurized with hydrogen. Hydrogen was added to the liquid feed at a constant flow rate of 30 l/h (STP conditions). The liquid feed mass flow was 2.3 kg/h. The pressure in the reactor was 100 bar.

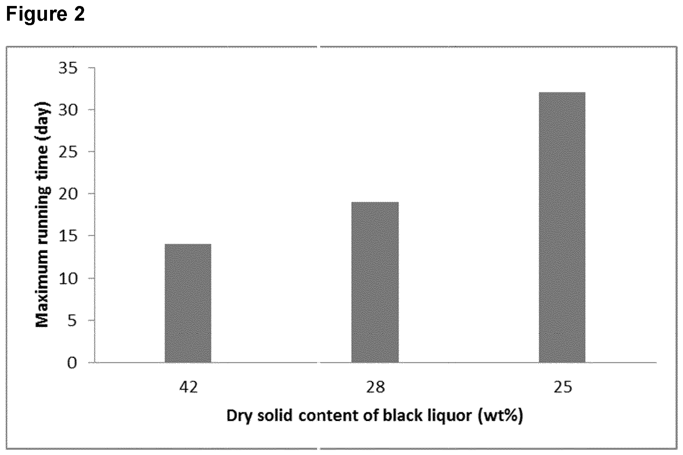

The maximum running time of the reactor was determined with different dry solid contents from 25 - 42 weight-% in the feed to the reactor. Figure 2 shows the running time of the reactor before it got clogged due to solid deposition inside the reactor, leading to a significant pressure drop (>10 bar).

A maximum running time of only 2 weeks could be obtained when running the reactor in down-flow mode with 42 weight-% dry solid content in the feed.

During these two weeks the reactor was flushed with water every alternate day for 1 to 2 hrs.

We also tested the maximum running time of the reactor with lower dry solid contents of 28 weight-% and 25 weight-% in the feed. In these tests periodic water flushing was not done. Even when lowering dry solid content to 25 weight-%, we could hardly run the reactor for one month before it clogged completely (c.f. Figure 2).

The product from the reactor was cooled to room temperature (using a water based shell-and-tube cooling system) and passed to a high pressure separator where gases were separated from the liquid. The resulting liquid was sent to an acidification vessel where it was acidified using sulfuric acid to a pH of around 5-6. A polar extracting solvent with a low boiling point (e.g. less than 100°C) was simultaneously added. The simultaneous addition of acidification agent and solvent led to a substantial reduction of foaming.

The mixture containing the acidified reactor product and the polar extracting solvent was sent to a decanter where three phases were obtained, namely an upper organic phase, a middle solid phase and a bottom aqueous phase. The upper phase containing the polar solvent and the bio-oil was sent for further conditioning to a guard reactor containing ion exchange material where salts present in the solution were removed.

The desalted organic phase containing the polar extracting solvent and the bio-oil was further mixed with a polar diluent with a high boiling point (e.g. more than 100°C) and sent to an evaporation unit. The low boiling polar extracting solvent was removed from the bio-oil and the diluent, and recycled back to the acidification vessel.

The mixture of bio-oil and diluent was sent to another reactor for further processing. The bio-oil yield was around 60 weight-% based on the mass of Klason lignin present in the feed to the reactor, calculated gravimetrically, ignoring any small content of hemicellulose in the black liquor and its possible contribution to the bio-oil as organic acids.

### Example 2

The lignin-depolymerization reactor was operated in the up-flow mode, i.e. the reactor was fed from the bottom and the product was withdrawn from the top.

The following process conditions were used:
Black liquor (solid content 48 weight-%) was passed to a container after filtration through a 70 µm filter. Water was added to the container for adjusting the solid content of the final mixture to 40 weight-%. The Klason lignin content of the final mixture was analyzed to be 150 g/kg. The mixture from the container was first pumped through a preheater operated before sending it to the reactor which was operated at a temperature of around 235°C. The reactor was pressurized with hydrogen. Hydrogen was added to the liquid feed at a constant flow rate of 30 l/h (STP conditions). The liquid feed mass flow was 2.3 kg/h. The pressure in the reactor was 110 bar.

By changing the flow direction within the reactor, the maximum running time of the reactor was extended to over 2 months and more without any increase of the pressure drop in the reactor. Apart from changing the flow direction, a temperature gradient was adjusted in the reactor wherein the temperature was around 20-30°C lower than the temperature in the upper part of the reactor. This further helped in avoiding any salt precipitation in the bottom of the reactor which is generally prone to clog. The reactor was flushed with water every 3 - 4 days.

The product from the reactor was further treated as described in Example 1.

The yield of bio-oil was about 60 weight% based on the mass of Klason lignin present in the feed to the reactor, calculated gravimetrically, ignoring any small content of hemicellulose in the black liquor and its possible contribution to the bio-oil as organic acids.

### Example 3

Water, NaOH and hydrolysis lignin were combined in a mass ratio H₂O:NaOH:lignin of 10:1:1. The lignin was dissolved during 20 minutes stirring at room temperature followed by heat treatment at 230 °C as described in Example 2. The bio-oil composition after heat treatment was smooth, i.e. no solid particles or char were observed and the pH was 13.3.

Acidification was performed by continuous addition of concentrated sulfuric acid and the bio-oil composition to reach pH 4.4. The acid consumption was 55 ml/kg bio-oil composition. The bio-oil yield was 45%.

## Claims

1. A process for producing bio-oil comprising the steps of:
(a) providing a black liquor composition having an alkaline pH,
(b) passing the black liquor composition through a reactor under conditions of elevated temperature and elevated pressure, thereby causing depolymerization of the lignin, wherein a bio-oil composition comprising depolymerized lignin is obtained,
wherein the reactor is operated in an up-flow mode, comprising introducing the composition into a lower portion of the reactor, passing the composition through the reactor in an upward direction and removing the composition from an upper portion of the reactor, and
wherein in step (b) the reactor is operated with a vertical temperature gradient under conditions where a lower temperature is in the lower reactor portion and a higher temperature is in the upper reactor portion,
(c) optionally cooling the bio-oil composition and removing gaseous components therefrom,
(d) optionally adding at least one acidifying agent for pH adjustment, and optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and optionally an organic extracting agent,
(g) optionally desalting the oil phase,
(h) optionally adding an organic diluent to the oil phase,
(i) optionally evaporating the organic extracting agent comprised in the oil phase, and
(j) obtaining a bio-oil comprising depolymerized lignin.

2. The process of claim 1 wherein the black liquor composition provided according to step (a) comprises a Klason lignin content of about 50 g/kg to about 300 g/kg, particularly of about 100 g/kg to about 200 g/kg based on the total volume of the composition.

3. The process of claim 1 or 2 wherein in step (b) the composition is introduced into the bottom of the reactor, passed through the reactor in an upward direction and removed from the top of the reactor.

4. The process of any one of the preceding claims wherein in step (b) the temperature difference between the lower reactor portion and the upper reactor portion is between about 5°C and about 150°C, particularly between about 10°C and about 100°C and more particularly between about 10°C and about 50°C.

5. The process of any one of the preceding claims wherein in step (b) the reactor is flushed with an aqueous liquid, e.g. after an operation period of about 2 to about 7 days.

6. The process of any one of the preceding claims wherein the organic extracting agent added in step (d) is a low-boiling organic solvent, particularly selected from esters, ethers, ketones and alcohols, e.g. ethyl acetate, methyl tetrahydrofuran, isopropyl acetate, and, or any combination thereof.

7. The process of any one of the preceding claims wherein the acidifying agent and the organic extracting agent are added substantially simultaneously in step (d) to the composition.

8. The process of any one of the preceding claims wherein in step (d) the acidifying agent and/or the organic extracting agent are added at an elevated temperature, e.g. at a temperature of about 50°C and up to below the boiling point of the extracting agent.

9. The process of any one of the preceding claims wherein desalting in step (g) comprises (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material, wherein the aqueous washing liquid may comprise a metal chelator and/or an organic acid.

10. The process of claim 9 wherein desalting in step (g) comprises (i) contacting the oil phase with an aqueous washing liquid and carrying out a phase-separation wherein the resulting mixture is separated into an oil phase and at least one aqueous phase, and subsequently (ii) contacting the composition with an adsorbent and/or an ion exchange material, wherein the aqueous washing liquid may be at least partially recycled and reused several times, wherein the aqueous washing liquid may comprise a metal chelator and/or an organic acid.

11. The process of any one of the preceding claims wherein the organic diluent added in step (h) is a liquid having a higher boiling point than an extracting agent added in step (d).

12. The process of any one of the preceding claims wherein the depolymerized lignin obtained in step (j) has a weight average molecular weight of about 200 to about 2000 g/mol, particularly of about 250 to about 1000 g/mol, more particularly of 300 to about 800 g/mol.

13. The process of any one of the preceding claims wherein the bio-oil obtained in step (j) is further processed to a hydrocarbon product, wherein the bio-oil may be subjected to hydrotreatment.

14. The process of any one of the preceding claims which is operated continuously.

15. Use of a unit for producing bio-oil in a process for producing bio-oil of any one of claims 1-14, wherein the unit for producing bio-oil comprises:
(a) a container for providing a black liquor composition having an alkaline pH, and optionally including means for adding further components to the composition,
(b) a reactor adapted for operation under conditions of elevated temperature and elevated pressure and for producing a bio-oil composition comprising depolymerized lignin,
wherein the reactor is adapted for operation in an up-flow mode, and comprises an inlet for introducing the black liquor composition from the container (a) into a lower reactor portion and an outlet for removing the bio-oil composition from an upper reactor portion, and
wherein the reactor is adapted for operation with a vertical temperature gradient under conditions where a lower temperature is in the lower reactor portion and a higher temperature is in the upper reactor portion,
(c) optionally a condenser adapted for cooling the bio-oil composition from the reactor (b) and for removing gaseous components therefrom,
(d) optionally a mixing device adapted for adding at least one acidifying agent for pH adjustment, and/or for adding at least one organic extracting agent to the composition from the reactor (b) or the condenser (c), if present,
(e) optionally a filtration device adapted for filtering the oil phase from the mixing device (d),
(f) a separator adapted for obtaining an oil phase from the bio-oil composition by phase separation, wherein the oil phase comprises depolymerized lignin and optionally an organic extracting agent,
(g) optionally a desalting device adapted for desalting the oil phase from the separator (f),
(h) optionally a mixing device adapted for adding an organic diluent to the oil phase from the separator (f),
(i) optionally an evaporator adapted for evaporating the organic extracting agent comprised in the oil phase from the separator (f), and optionally recycling the evaporated organic extracting agent to mixing device (d) and
(j) optionally a container for collecting a bio-oil comprising depolymerized lignin.

## Patentansprüche

1. Verfahren zur Herstellung von Bioöl, umfassend die Schritte:
(a) Bereitstellen einer Schwarzlaugenzusammensetzung mit einem alkalischen pH,
(b) Durchleiten der Schwarzlaugenzusammensetzung durch einen Reaktor unter Bedingungen erhöhter Temperatur und erhöhten Drucks, wodurch eine Depolymerisation des Lignins bewirkt wird, wobei eine Bioölzusammensetzung, die depolymerisiertes Lignin umfasst, erhalten wird,
wobei der Reaktor in einem Aufwärtsstrommodus betrieben wird, umfassend ein Einführen der Zusammensetzung in einen unteren Abschnitt des Reaktors, ein Durchleiten der Zusammensetzung durch den Reaktor in einer Aufwärtsrichtung und ein Entfernen der Zusammensetzung aus einem oberen Abschnitt des Reaktors, und
wobei in Schritt (b) der Reaktor mit einem vertikalen Temperaturgradienten unter Bedingungen betrieben wird, bei denen im unteren Reaktorabschnitt eine niedrigere Temperatur und im oberen Reaktorabschnitt eine höhere Temperatur herrscht,
(c) gegebenenfalls Abkühlen der Bioölzusammensetzung und Entfernen gasförmiger Komponenten daraus,
(d) gegebenenfalls Zugeben mindestens eines Säuerungsmittels zur pH-Wert-Einstellung und gegebenenfalls Zugeben mindestens eines organischen Extraktionsmittels zur Bioölzusammensetzung,
(e) gegebenenfalls Filtrieren der Ölphase,
(f) Erhalten einer Ölphase aus der Bioölzusammensetzung durch Phasentrennung, wobei die Ölphase depolymerisiertes Lignin und gegebenenfalls ein organisches Extraktionsmittel umfasst,
(g) gegebenenfalls Entsalzen der Ölphase,
(h) gegebenenfalls Zugeben eines organischen Verdünnungsmittels zur Ölphase,
(i) gegebenenfalls Verdampfen des in der Ölphase umfassten organischen Extraktionsmittels,
(j) Erhalte eines Bioöls, das depolymerisiertes Lignin umfasst.

2. Verfahren nach Anspruch 1, wobei die gemäß Schritt (a) bereitgestellte Schwarzlaugenzusammensetzung einen Klason-Ligningehalt von etwa 50 g/kg bis etwa 300 g/kg, insbesondere von etwa 100 g/kg bis etwa 200 g/kg, bezogen auf das Gesamtvolumen der Zusammensetzung, aufweist.

3. Verfahren nach Anspruch 1 oder 2, wobei in Schritt (b) die Zusammensetzung in den Boden des Reaktors eingeführt, durch den Reaktor in einer Aufwärtsrichtung geleitet und aus dem Oberteil des Reaktors entnommen wird.

4. Verfahren nach einem der vorhergehenden Ansprüche, wobei in Schritt (b) die Temperaturdifferenz zwischen dem unteren Reaktorabschnitt und dem oberen Reaktorabschnitt zwischen etwa 5°C und etwa 150°C, insbesondere zwischen etwa 10°C und etwa 100°C und ganz besonders zwischen etwa 10°C und etwa 50°C liegt.

5. Verfahren nach einem der vorhergehenden Ansprüche, wobei in Schritt (b) der Reaktor mit einer wässrigen Flüssigkeit gespült wird, z. B. nach einer Betriebsdauer von etwa 2 bis etwa 7 Tagen.

6. Verfahren nach einem der vorhergehenden Ansprüche, wobei das in Schritt (d) zugegebene organische Extraktionsmittel ein niedrigsiedendes organisches Lösungsmittel ist, insbesondere ausgewählt aus Estern, Ethern, Ketonen und Alkoholen, z. B. Ethylacetat, Methyltetrahydrofuran, Isopropylacetat und/oder einer beliebigen Kombination davon.

7. Verfahren nach einem der vorhergehenden Ansprüche, wobei das Säuerungsmittel und das organische Extraktionsmittel im Schritt (d) im Wesentlichen gleichzeitig der Zusammensetzung zugegeben werden.

8. Verfahren nach einem der vorhergehenden Ansprüche, wobei in Schritt (d) das Säuerungsmittel und/oder das organische Extraktionsmittel bei erhöhter Temperatur, z. B. bei einer Temperatur von etwa 50°C und bis unterhalb des Siedepunkts des Extraktionsmittels, zugegeben werden.

9. Verfahren nach einem der vorhergehenden Ansprüche, wobei das Entsalzen in Schritt (g) umfasst: (i) Zugeben einer wässrigen Waschflüssigkeit zur Ölphase und Durchführen einer Phasentrennung, wobei das resultierende Gemisch in eine Ölphase und mindestens eine wässrige Phase getrennt wird, und/oder (ii) In-Kontakt-Bringen der Ölphase mit einem Adsorptionsmittel und/oder einem Ionenaustauschmaterial, wobei die wässrige Waschflüssigkeit einen Metallchelator und/oder eine organische Säure umfassen kann.

10. Verfahren nach Anspruch 9, wobei das Entsalzen in Schritt (g) umfasst: (i) In-Kontakt-Bringen der Ölphase mit einer wässrigen Waschflüssigkeit und Durchführen einer Phasentrennung, wobei das resultierende Gemisch in eine Ölphase und mindestens eine wässrige Phase getrennt wird, und anschließend (ii) In-Kontakt-Bringen der Zusammensetzung mit einem Adsorptionsmittel und/oder einem Ionenaustauschmaterial, wobei die wässrige Waschflüssigkeit zumindest teilweise recycelt und mehrmals wiederverwendet werden kann, wobei die wässrige Waschflüssigkeit einen Metallchelator und/oder eine organische Säure umfassen kann.

11. Verfahren nach einem der vorhergehenden Ansprüche, wobei das in Schritt (h) zugegebene organische Verdünnungsmittel eine Flüssigkeit mit einem höheren Siedepunkt als ein in Schritt (d) zugegebenes Extraktionsmittel ist.

12. Verfahren nach einem der vorhergehenden Ansprüche, wobei das in Schritt (j) erhaltene depolymerisierte Lignin ein gewichtsmittleres Molekulargewicht von etwa 200 bis etwa 2000 g/mol, insbesondere von etwa 250 bis etwa 1000 g/mol, ganz besonders von 300 bis etwa 800 g/mol aufweist.

13. Verfahren nach einem der vorhergehenden Ansprüche, wobei das in Schritt (j) erhaltene Bioöl zu einem Kohlenwasserstoffprodukt weiterverarbeitet wird, wobei das Bioöl einer Hydrobehandlung unterzogen werden kann.

14. Verfahren nach einem der vorhergehenden Ansprüche, das kontinuierlich ausgeführt wird.

15. Verwendung einer Anlage zur Herstellung von Bioöl in einem Verfahren zur Herstellung von Bioöl nach einem der Ansprüche 1-14, wobei die Anlage zur Herstellung von Bioöl umfasst:
(a) einen Behälter zur Bereitstellung einer Schwarzlaugenzusammensetzung mit alkalischem pH und der gegebenenfalls Mittel zur Zugabe weiterer Komponenten zu der Zusammensetzung umfasst,
(b) einen Reaktor, der für einen Betrieb unter Bedingungen erhöhter Temperatur und erhöhten Drucks und zur Herstellung einer Bioölzusammensetzung, die depolymerisiertes Lignin umfasst, eingerichtet ist,
wobei der Reaktor für einen Betrieb in einem Aufstrommodus eingerichtet ist und einen Einlass zum Einleiten der Schwarzlaugenzusammensetzung aus dem Behälter (a) in einen unteren Reaktorabschnitt und einen Auslass zum Entfernen der Bioölzusammensetzung aus einem oberen Reaktorabschnitt aufweist, und
wobei der Reaktor für einen Betrieb mit einem vertikalen Temperaturgradienten unter Bedingungen eingerichtet ist, bei denen im unteren Reaktorabschnitt eine niedrigere Temperatur und im oberen Reaktorabschnitt eine höhere Temperatur herrscht,
(c) gegebenenfalls einen Kondensator, der für ein Abkühlen der Bioölzusammensetzung aus dem Reaktor (b) und für ein Entfernen gasförmiger Bestandteile daraus eingerichtet ist,
(d) gegebenenfalls eine Mischvorrichtung, die dazu eingerichtet ist, mindestens ein Säuerungsmittel zur pH-Wert-Einstellung zuzugeben und/oder mindestens ein organisches Extraktionsmittel zuzugeben zu der Zusammensetzung aus dem Reaktor (b) oder dem Kondensator (c), sofern vorhanden,
(e) gegebenenfalls eine Filtervorrichtung, die zum Filtrieren der Ölphase aus der Mischvorrichtung (d) eingerichtet ist,
(f) einen Separator, der dazu eingerichtet ist, eine Ölphase aus der Bioölzusammensetzung durch Phasentrennung zu erhalten, wobei die Ölphase depolymerisiertes Lignin und gegebenenfalls ein organisches Extraktionsmittel umfasst,
(g) gegebenenfalls eine Entsalzungsvorrichtung, die zur Entsalzung der Ölphase aus dem Separator (f) eingerichtet ist,
(h) gegebenenfalls eine Mischvorrichtung, die zum Hinzufügen eines organischen Verdünnungsmittels zur Ölphase aus dem Separator (f) eingerichtet ist,
(i) gegebenenfalls einen Verdampfer, der zum Verdampfen des organischen Extraktionsmittels, das in der Ölphase aus dem Separator (f) umfasst ist, und gegebenenfalls zum Recyclen des verdampften organische Extraktionsmittel zur Mischvorrichtung (d) eingerichtet ist und
(j) gegebenenfalls einen Behälter zum Auffangen eines Bioöls, das depolymerisiertes Lignin umfasst.

## Revendications

1. Procédé de production de bio-huile, comprenant les étapes consistant à :
(a) fournir une composition de liqueur noire ayant un pH alcalin,
(b) passer la composition de liqueur noire à travers un réacteur dans des conditions de température élevée et de pression élevée, provoquant ainsi une dépolymérisation de la lignine, dans lequel une composition de bio-huile comprenant de la lignine dépolymérisée est obtenue,
dans lequel le réacteur est exploité dans un mode à flux ascendant, comprenant l'introduction de la composition dans une partie inférieure du réacteur, le passage de la composition à travers le réacteur dans un sens vers le haut et le retrait de la composition d'une partie supérieure du réacteur, et
dans lequel, à l'étape (b), le réacteur est exploité avec un gradient vertical de température dans des conditions dans lesquelles une température plus basse est dans la partie inférieure de réacteur et une température plus haute est dans la partie supérieure de réacteur,
(c) facultativement, refroidir la composition de bio-huile et en retirer des constituants gazeux,
(d) facultativement, ajouter au moins un agent acidifiant à des fins d'ajustement de pH, et facultativement, ajouter au moins un agent d'extraction organique à la composition de bio-huile,
(e) facultativement, filtrer la phase d'huile,
(f) obtenir une phase d'huile à partir de la composition de bio-huile par une séparation de phases, dans lequel la phase d'huile comprend de la lignine dépolymérisée et facultativement un agent d'extraction organique,
(g) facultativement, dessaler la phase d'huile,
(h) facultativement, ajouter un diluant organique à la phase d'huile,
(i) facultativement, provoquer une évaporation de l'agent d'extraction organique compris dans la phase d'huile, et
(j) obtenir une bio-huile comprenant de la lignine dépolymérisée.

2. Procédé selon la revendication 1, dans lequel la composition de liqueur noire fournie à l'étape (a) a une teneur en lignine de Klason d'environ 50 g/kg à environ 300 g/kg, particulièrement d'environ 100 g/kg à environ 200 g/kg sur la base du volume total de la composition.

3. Procédé selon la revendication 1 ou la revendication 2, dans lequel, à l'étape (b), la composition est introduite dans la partie inférieure du réacteur, passée à travers le réacteur dans un sens vers le haut et est retirée depuis la partie supérieure du réacteur.

4. Procédé selon l'une quelconque des revendications précédentes, dans lequel, à l'étape (b), la différence de température entre la partie inférieure de réacteur et la partie supérieure de réacteur est comprise entre environ 5 °C et environ 150 °C, particulièrement entre environ 10 °C et environ 100 °C et plus particulièrement entre environ 10 °C et environ 50 °C.

5. Procédé selon l'une quelconque des revendications précédentes, dans lequel, à l'étape (b), le réacteur est rincé avec un liquide aqueux, par exemple après une période de fonctionnement d'environ 2 à environ 7 jours.

6. Procédé selon l'une quelconque des revendications précédentes, dans lequel l'agent d'extraction organique ajouté à l'étape (d) est un solvant organique à bas point d'ébullition, particulièrement choisi à partir d'esters, d'éthers, de cétones et d'alcools, par exemple d'acétate d'éthyle, de tétrahydrofurane de méthyle, d'acétate d'isopropyle, et/ou d'une quelconque combinaison de ces derniers.

7. Procédé selon l'une quelconque des revendications précédentes, dans lequel l'agent acidifiant et l'agent d'extraction organique sont ajoutés sensiblement simultanément à la composition , à l'étape (d).

8. Procédé selon l'une quelconque des revendications précédentes, dans lequel, à l'étape (d), l'agent acidifiant et/ou l'agent d'extraction organique sont ajoutés à une température élevée, par exemple à une température d'environ 50 °C et jusqu'à une température en-deçà du point d'ébullition de l'agent d'extraction.

9. Procédé selon l'une quelconque des revendications précédentes, dans lequel le dessalage à l'étape (g) comprend (i) ajouter un liquide de lavage aqueux à la phase d'huile et effectuer une séparation de phases, dans lequel le mélange ainsi obtenu est séparé en une phase d'huile et au moins une phase aqueuse, et/ou à (ii) mettre en contact la phase d'huile avec un adsorbant et/ou avec un matériau échangeur d'ions, dans lequel le liquide de lavage aqueux peut comprendre un chélateur métallique et/ou un acide organique.

10. Procédé selon la revendication 9, dans lequel le dessalage à l'étape (g) comprend (i) mettre en contact la phase d'huile avec un liquide de lavage aqueux et effectuer une séparation de phases, dans lequel le mélange ainsi obtenu est séparé en une phase d'huile et au moins une phase aqueuse, et ultérieurement à (ii) mettre en contact la composition avec un adsorbant et/ou un matériau échangeur d'ions, dans lequel le liquide de lavage aqueux peut être au moins partiellement recyclé et réutilisé plusieurs fois, dans lequel le liquide de lavage aqueux peut comprendre un chélateur métallique et/ou un acide organique.

11. Procédé selon l'une quelconque des revendications précédentes, dans lequel le diluant organique ajouté à l'étape (h) est un liquide ayant un point d'ébullition supérieur à celui d'un agent d'extraction ajouté à l'étape (d).

12. Procédé selon l'une quelconque des revendications précédentes, dans lequel la lignine dépolymérisée obtenue à l'étape (j) a un poids moléculaire moyen en poids d'environ 200 à environ 2000 g/mol, particulièrement d'environ 250 à environ 1000 g/mol, plus particulièrement de 300 à environ 800 g/mol.

13. Procédé selon l'une quelconque des revendications précédentes, dans lequel la bio-huile obtenue à l'étape (j) est ensuite traitée en un produit d'hydrocarbure, dans lequel la bio-huile peut être soumise à un hydrotraitement.

14. Procédé selon l'une quelconque des revendications précédentes, mis en œuvre en continu.

15. Utilisation d'une unité de production de bio-huile dans un procédé de production de bio-huile selon l'une quelconque des revendications 1 à 14, dans laquelle l'unité de production de bio-huile comprend :
(a) un contenant pour fournir une composition de liqueur noire ayant un pH alcalin, et facultativement comprenant des moyens pour ajouter d'autres constituants à la composition,
(b) un réacteur conçu pour un fonctionnement dans des conditions de température élevée et de pression élevée et pour produire une composition de bio-huile comprenant de la lignine dépolymérisée,
dans lequel le réacteur est conçu pour un fonctionnement dans un mode à flux ascendant, et comprend une entrée pour introduire la composition de liqueur noire provenant du contenant (a) dans une partie inférieure de réacteur et une sortie pour retirer la composition de bio-huile d'une partie supérieure de réacteur, et
dans lequel le réacteur est conçu pour un fonctionnement avec un gradient vertical de température dans des conditions dans lesquelles une température plus basse est dans la partie inférieure de réacteur et une température plus haute est dans la partie supérieure de réacteur,
(c) facultativement, un condenseur conçu pour refroidir la composition de bio-huile provenant du réacteur (b) et pour en retirer des constituants gazeux,
(d) facultativement, un dispositif de mélange conçu pour ajouter au moins un agent acidifiant à des fins d'ajustement de pH, et/ou pour ajouter au moins un agent d'extraction organique à la composition provenant du réacteur (b) ou du condenseur (c), si présent,
(e) facultativement, un dispositif de filtration conçu pour filtrer la phase d'huile provenant du dispositif de mélange (d),
(f) un séparateur conçu pour obtenir une phase d'huile à partir de la composition de bio-huile par une séparation de phases, dans lequel la phase d'huile comprend de la lignine dépolymérisée et facultativement un agent d'extraction organique,
(g) facultativement, un dispositif de dessalage conçu pour dessaler la phase d'huile provenant du séparateur (f),
(h) facultativement, un dispositif de mélange conçu pour ajouter un diluant organique à la phase d'huile provenant du séparateur (f),
(i) facultativement, un évaporateur conçu pour provoquer une évaporation de l'agent d'extraction organique compris dans la phase d'huile provenant du séparateur (f), et facultativement pour recycler l'agent d'extraction organique évaporé vers le dispositif de mélange (d), et
(j) facultativement, un contenant pour collecter une bio-huile comprenant de la lignine dépolymérisée.
